# EUROPÄISCHE PATENTSCHRIFT

(11) **EP 3 855 080 B1**
(45) Veröffentlichungstag und Bekanntmachung des Hinweises auf die Patenterteilung: **29.04.2026**
(21) Anmeldenummer: 21150137.4
(22) Anmeldetag: 05.01.2021
(51) Int. Cl.: F24D 19/10, F04D 15/00

(54) **VERFAHREN ZUR EINSTELLUNG EINER FÖRDERLEISTUNG IN EINEM HEIZKREISLAUF**
METHOD FOR ADJUSTING A CONVEYING CAPACITY IN A HEATING CIRCUIT
PROCÉDÉ DE RÉGLAGE D'UN DÉBIT DANS UN CIRCUIT DE CHAUFFAGE

(30) Priorität: 22.01.2020 DE 102020101410
(43) Veröffentlichungstag der Anmeldung: 28.07.2021
(73) Patentinhaber: Vaillant GmbH, 42859 Remscheid (DE)
(72) Erfinder: Heinen, Lars, 53347 Alfter (DE); Chesnokov, Petro, 42653 Solingen (DE); Matthias, Frank, 58454 Witten (DE)
(74) Vertreter: Popp, Carsten

(56) Entgegenhaltungen:
- CH-A1- 705 143
- DE-A1- 102011 008 165
- DE-A1- 102017 203 474

## Beschreibung

Die Erfindung betrifft ein Verfahren zur Einstellung einer Förderleistung in einem Heizkreislauf, ein Computerprogramm, ein maschinenlesbares Speichermedium sowie eine Vorrichtung mit einem

### Heizgerät für ein Gebäude.

Der Heizkreislauf betrifft einen solchen mit einem Heizgerät, einer Fördereinrichtung und mindestens einem durchströmbaren Heizkörper, wobei zur Regelung des Durchflusses durch den mindestens einen Heizkörper jeweils ein ab Erreichen eines definierten Ventilvordrucks druckunabhängiges Regelventil im Bereich des mindestens einen Heizkörpers in dem Heizkreislauf angeordnet ist. Entsprechende Regelventile benötigen üblicherweise einen relativ hohen Vordruck, der energetisch besonders aufwändig ist. In der Regel stellen daher selbst Fachhandwerker die Heizkreispumpe in einem solchen Heizkreislauf einfach auf die höchste Stufe, da insbesondere ohne sehr aufwändige, zusätzliche und bei der üblichen Inbetriebnahme einer Heizungsanlage nicht vorhandene Messtechnik der maximal erforderliche Vordruck (für den gesamten Heizkreislauf) nicht ermittelt werden kann. Durch das damit verbundene Setzen des höchsten Pumpendrucks soll sichergestellt werden, dass der Vordruck an jedem Regelventil (unabhängig von seiner Entfernung zur Heizkreispumpe) ausreichend groß ist, um einen stabilen Betrieb der Regelventile zu gewährleisten. Diese Vorgehensweise ist aus energetischer Sicht allerdings besonders ineffizient.

Aus der DE 10 2011 008165 A1 ist ein Verfahren zum leistungsoptimierten Betreiben einer elektromotorisch angetriebenen Pumpe bei geringen Volumentströmen bekannt. Aus der CH 705 143 A1 ist ein Verfahren zum Abgleichen einer Gruppe von Verbrauchern in einem Fluidtransportsystem bekannt. Aus der DE 10 2017 203474 A1 ist ein Verfahren zur Regelung einer drehzahlvariablen Umwälzpumpe bekannt.

Es ist daher Aufgabe der Erfindung, ein Verfahren bereitzustellen, das die im Zusammenhang mit dem Stand der Technik geschilderten Probleme zumindest teilweise löst. Insbesondere soll ein aus energetischer und/oder akustischer Sicht verbesserter Betrieb eines Heizkreislaufes ermöglicht werden.

Diese Aufgabe wird gemäß einem Verfahren mit den Merkmalen des Anspruchs 1 gelöst. Vorteilhafte Ausgestaltungen ergeben sich durch die Merkmale der abhängigen Ansprüche.

Hierzu trägt ein Verfahren zur Einstellung einer Förderleistung in einem Heizkreislauf mit einem Heizgerät, einer Fördereinrichtung und mindestens einem durchströmbaren Heizkörper bei, wobei zur Regelung des Durchflusses durch den mindestens einen Heizkörper jeweils ein ab Erreichen eines definierten Ventilvordrucks druckunabhängiges Regelventil im Bereich des mindestens einen Heizkörpers in dem Heizkreislauf angeordnet ist. Dabei umfasst das Verfahren zumindest folgende Schritte:
a) Ermitteln eines Auslegungspunktes für den Durchfluss durch den Heizkreislauf,
b) Anfahren des Auslegungspunktes durch Erhöhen oder Verringern der Förderleistung der Fördereinrichtung bis der Auslegungspunkt erreicht wird,
c) Bestimmen eines Maßes für eine minimale Förderleistung für den Heizkreislauf, in Abhängigkeit eines Maßes für die Förderleistung, bei welcher der Auslegungspunkt in Schritt b) erreicht wird,
sodass auch im ungünstigsten Fließweg durch den Heizkreislauf im regulären Betrieb der erforderliche Ventilvordruck vorhanden ist, um die korrekte Funktion des Regelventils zu ermöglichen.

Das Verfahren kann beispielsweise während einer (Erst-)Inbetriebnahme und/oder einer Wartung eines Heizungssystems mit dem Heizkreislauf durchgeführt werden. Das Verfahren kann in vorteilhafter Weise zu einer energetisch verbesserten Einstellung der Fördereinrichtung, wie etwa einer Umwälzpumpe in einem Heizungssystem, in dem druckunabhängige Regelventile eingesetzt werden, beitragen. Es wird mittels des Verfahrens (hierzu) die Fördereinrichtung, insbesondere die (Heizkreis- bzw. Umwälz-)Pumpe (bzw. die Förderhöhe) auf den minimal erforderlichen (Anlagen-)Druck eingestellt, sodass auch im ungünstigsten Fließweg durch den Heizkreis (in der Regel an dem Heizkörper, der am weitesten von der Fördereinrichtung entfernt ist) im regulären Betrieb (stets und/oder gerade noch) der erforderliche Ventilvordruck vorhanden ist, um die korrekte Funktion des Regelventils ermöglichen zu können. Diese Maßnahme kann dazu beitragen einen energetisch möglichst effizientesten Betriebspunkt zu erreichen.

Der Heizkreislauf ist in der Regel ein geschlossener Kreislauf. Der Heizkreislauf kann eine Vielzahl von Rohren umfassen, die das Heizgerät und/oder die Fördereinrichtung mit dem mindestens einen durchströmbaren Heizkörper verbinden können. In dem Heizkreislauf kann ein Wärmeübertragungsmedium, wie beispielsweise Wasser zirkulieren. Bei der Fördereinrichtung kann es sich beispielsweise um eine Pumpe, wie etwa eine Heizkreispumpe und/oder Umwälzpumpe handeln. Die Fördereinrichtung kann auch mehrere Pumpen umfassen. Die Fördereinrichtung kann in dem Heizgerät angeordnet und/oder mit dem Heizgerät verbunden sein. Der Heizkreislauf kann in einem (Wohn-)Gebäude angeordnet sein und/oder zur Beheizung eines Gebäudes, insbesondere mindestens eines Raumes in dem Gebäude dienen. Der Heizkreislauf kann mehrere, insbesondere parallel geschaltete Heizkörper umfassen. Die Heizkörper können unterschiedlich ausgeführt sein, insbesondere unterschiedliche Größen aufweisen.

Bei dem Heizgerät handelt es sich in der Regel um ein Heizgerät für ein (Wohn-)Gebäude. Bei dem Heizgerät kann es sich um ein Gas- und/oder Ölheizgerät handeln. Dies betrifft mit anderen Worten insbesondere ein Heizgerät, welches dazu eingerichtet ist, einen oder mehrere fossile Brennstoffe wie etwa Flüssiggas, Erdgas und/oder Erdöl, ggf. unter Zufuhr von Umgebungsluft zu verbrennen, um Energie zur Erwärmung von beispielsweise Wasser zum Gebrauch in einer Wohnung eines Gebäudes und/oder zur Beheizung zumindest eines Teils einer Wohnung eines Gebäudes zu erzeugen. Beispielsweise kann es sich bei dem Heizgerät um ein sogenanntes Gas-Brennwertgerät handeln. Das Heizgerät weist in der Regel zumindest einen Brenner und eine (zweite) Fördereinrichtung wie etwa ein Gebläse auf, die ein Gemisch von Brennstoff (Gas) und Verbrennungsluft (durch einen Gemischkanal des Heizgeräts) zum Brenner fördert. Anschließend kann das durch die Verbrennung entstehende Abgas durch ein (internes) Abgasrohr des Heizgeräts zu einer Abgasanlage (des Gebäudes) geführt werden. Grundsätzlich kann das Heizgerät (alternativ) einen Wärmetauscher einer Wärmepumpenanlage umfassen. In diesem Zusammenhang kann das Heizgerät dazu eingerichtet sein, Wärme zwischen einem Kältekreislauf und dem Heizkreislauf zu übertragen. Bei dem Gebäude kann es sich grundsätzlich um ein Wohngebäude und/oder ein gewerblich genutztes Gebäude handeln.

Es ist in der Regel jedem Heizkörper ein (dynamisches) Regelventil zugeordnet (und/oder vorgeordnet), das ab Erreichen eines (vor-)definierten (bzw. vorgebbaren) Ventilvordrucks den Durchfluss bzw. Volumenstrom durch den Heizkörper druckunabhängig (unabhängig vom Anlagendruck bzw. Gesamtdruck des Heizkreislaufs) regelt. Solche Regelventile werden allgemein auch als sogenannte "druckunabhängige Regelventile" bezeichnet. Das druckunabhängige Regelventil kann (manuell und/oder mit dem entsprechenden Werkzeug) in verschiedenen Stufen (Ventilvordrücken) eingestellt werden. Mit den verschiedenen Stufen kann der (maximale) Durchfluss bzw. Volumenstrom durch den Heizkörper stufenweise gewählt werden. Der (maximale) Durchfluss bzw. Volumenstrom durch den Heizkörper kann beispielsweise in Abhängigkeit (der Größe und/oder Lage) des zu beheizenden Raumes und/oder in Abhängigkeit (der Größe) des betreffenden Heizkörpers gewählt werden. Die Einstellung des (erforderlichen maximalen) Durchflusses bzw. Volumenstroms durch den Heizkörper kann unmittelbar am Regelventil erfolgen und zum hydraulischen Abgleichen des Heizkreislaufs beitragen.

Auf das Regelventil kann ein Thermostat aufgesetzt werden, das zur manuellen Temperaturvorgabe dienen kann. Das Thermostat kann dabei insbesondere in Abhängigkeit zumindest der Raumisttemperatur und der manuell vorgebbaren Raumsolltemperatur das Regelventil betätigen, um den Durchfluss bzw. Volumenstrom durch den Heizkörper entsprechend zu beeinflussen. Insbesondere kann (dabei) der Durchfluss bzw. Volumenstrom durch den Heizkörper ausgehend von dem stufenweise einstellbaren (maximalen) Durchfluss bzw. Volumenstrom durch den Heizkörper auf einen Einstellwert des Regelventils gedrosselt werden. Alternativ oder zusätzlich zu einem Thermostat kann ein Heizkörperfühler vorgesehen sein, der mit dem Regelventil zusammenwirken kann. Entsprechende Regelventile haben insbesondere den Vorteil, dass der über den Einstellwert eingestellte Volumenstrom ab einem bestimmten Vordruck konstant gehalten werden kann. Dies kann dazu beitragen, akustische Emissionen des Heizkreislaufes zumindest zu reduzieren.

In Schritt a) erfolgt ein Ermitteln (insbesondere Berechnen) eines Auslegungspunktes für den Durchfluss durch den Heizkreislauf. Der Auslegungspunkt kann beispielsweise ein bestimmter Gesamtvolumenstrom bzw. Gesamtmassenstrom durch den Heizkreislauf sein. Wenn in dem Heizkreislauf mehrere Heizkörper parallel zueinander geschaltet sind, kann der Gesamtvolumenstrom beispielsweise aus einer Summe der einzelnen Heizkörpervolumenströme ermittelt werden. Zudem kann ein Sicherheitsaufschlag gemacht werden. Die einzelnen Heizkörpervolumenströme betreffen insbesondere den maximalen Volumenstrom durch den betreffenden Heizkörper. Der maximale Volumenstrom durch den Heizkörper kann beispielsweise von der Größe und/oder Lage des zu beheizenden Raumes und/oder von der Größe des betreffenden Heizkörpers abhängen. Der maximale Volumenstrom durch den Heizkörper kann an dem (dem betreffenden Heizkörper zugeordneten) Regelventil gewählt und/oder eingestellt werden. Der Auslegungspunkt kann grundsätzlich manuell und/oder in einer Heizgerätesteuerung ermittelt werden.

In Schritt b) erfolgt ein Anfahren des Auslegungspunktes durch Erhöhen oder Verringern der Förderleistung der Fördereinrichtung bis der Auslegungspunkt erreicht wird. Der Auslegungspunkt kann beispielsweise ausgehend von einem Stillstand der Fördereinrichtung durch (kontinuierliches) Erhöhen der Förderleistung (insbesondere durch Erhöhen der Drehzahl der Fördereinrichtung) angefahren werden. Der Auslegungspunkt kann (alternativ oder ggf. zusätzlich vorher und/oder nachher) ausgehend von einer maximalen Drehzahl der Fördereinrichtung durch (kontinuierliches) Verringern der Förderleistung (insbesondere durch Verringern der Drehzahl der Fördereinrichtung) angefahren werden. Das Anfahren des Auslegungspunktes kann grundsätzlich manuell und/oder von einer Heizgerätesteuerung gesteuert werden. Während des Anfahrens des Auslegungspunktes kann der Durchfluss bzw. (Gesamt-)Volumenstrom durch den Heizkreislauf beispielsweise mittels einer Anzeige des Heizgerätes von einem Bediener und/oder von einer Heizgerätesteuerung des Heizgerätes überwacht werden.

Das Anfahren des Auslegungspunktes durch Erhöhen oder Verringern der Förderleistung der Fördereinrichtung kann solange erfolgen, bis das Erreichen des Auslegungspunktes (ausreichend sicher) erkannt wird. Das Erreichen des Auslegungspunktes kann beispielsweise dadurch (ausreichend sicher) erkannt werden, dass der Durchfluss bzw. (Gesamt-)Volumenstrom durch den Heizkreislauf sich nicht mehr weiter verändert (also auf dem Wert des Auslegungspunktes verbleibt), obwohl die Förderleistung (insbesondere die Drehzahl der Fördereinrichtung) weiter erhöht bzw. weiter verringert wird. Dies lässt sich insbesondere damit erklären, dass ab Erreichen des Auslegungspunktes die Regelventile den Volumenstrom durch den Heizkreislauf begrenzen bzw. limitieren. Eine weitere Erhöhung der Förderleistung wäre somit insbesondere reine Verlustleistung. Diese soll mit dem Verfahren reduziert oder möglichst vermieden werden.

In Schritt c) erfolgt ein Bestimmen eines Maßes für eine minimale Förderleistung für den Heizkreislauf, in Abhängigkeit eines Maßes für die Förderleistung, bei welcher der Auslegungspunkt in Schritt b) erreicht wird. Bei dem Maß für die Förderleistung, bei welcher der Auslegungspunkt in Schritt b) erreicht wird, kann es sich beispielsweise um die Drehzahl der Fördereinrichtung, insbesondere um die Drehzahl einer Förderpumpe handeln, bei welcher der Auslegungspunkt in Schritt b) (ausreichend sicher) erreicht wurde. Bei dem Maß für die minimale Förderleistung kann es sich beispielsweise um die minimale Drehzahl der Fördereinrichtung handeln, bei der die Fördereinrichtung den minimal erforderlichen (Anlagen-)Druck erzeugt, sodass erfindungsgemäß auch im ungünstigsten Fließweg durch den Heizkreis (in der Regel an dem Heizkörper, der am weitesten von der Fördereinrichtung entfernt ist) im regulären Betrieb (stets und/oder gerade noch) der erforderliche Ventilvordruck vorhanden ist, um die korrekte Funktion des Regelventils ermöglichen zu können. Das Maß für die minimale Förderleistung kann beispielsweise dadurch (in Abhängigkeit des Maßes für die Förderleistung, bei welcher der Auslegungspunkt in Schritt b) erreicht wird) bestimmt werden, dass als Wert für das Maß für die minimale Förderleistung der Wert des Maßes für die Förderleistung, bei welcher der Auslegungspunkt in Schritt b) erreicht wird (ggf. mit einem Sicherheitsaufschlag) festgelegt wird.

Nach einer vorteilhaften Ausgestaltung wird vorgeschlagen, dass der Auslegungspunkt einen bestimmten Volumenstrom durch den Heizkreislauf beschreibt. Es kann in diesem Zusammenhang weiterhin vorgesehen sein, dass der Auslegungspunkt den (maximal möglichen) Gesamtvolumenstrom durch den Heizkreislauf beschreibt. Im Falle parallel geschalteter Heizkörper, kann der Gesamtvolumenstrom beispielsweise aus einer Summe der einzelnen (maximal möglichen) Heizkörpervolumenströme (die mittels der Regelventile einstellbar sind) ermittelt werden. Zudem kann ein Sicherheitsaufschlag gemacht werden.

Nach einer weiteren vorteilhaften Ausgestaltung wird vorgeschlagen, dass zum Anfahren des Auslegungspunktes eine Drehzahl der Fördereinrichtung erhöht oder verringert wird. Es kann in diesem Zusammenhang zum Beispiel eine Drehzahl einer Förderpumpe bzw. Umwälzpumpe des Heizkreislaufs erhöht oder verringert werden.

Nach einer weiteren vorteilhaften Ausgestaltung wird vorgeschlagen, dass zum Bestimmen des Maßes für die minimale Förderleistung eine minimale Drehzahl der Fördereinrichtung, bei welcher der Auslegungspunkt erreicht wird, ermittelt und mit einem Sicherheitsfaktor beaufschlagt wird. Der Sicherheitsfaktor kann beispielsweise im Bereich von 5% bis 20% liegen, insbesondere im Bereich von 5% bis 15% oder bei circa 10%.

Nach einer weiteren vorteilhaften Ausgestaltung wird vorgeschlagen, dass vor Schritt a) ein hydraulischer Abgleich des Heizkreislaufs durchgeführt wird. In diesem Zusammenhang kann die (stufenweise) Einstellbarkeit der Regelventile besonders vorteilhaft genutzt werden, um den Volumenstrom durch einzelne (parallele) Stränge des Heizkreislaufs einzustellen. Es können auch in grundsätzlich bekannter Weise Drosseln in den Heizkreislauf integriert werden, um beispielsweise die Durchströmung weiter entfernt liegender Stränge zu begünstigen.

Nach einer weiteren vorteilhaften Ausgestaltung wird vorgeschlagen, dass zumindest während Schritt b) kein Heizkörperfühler und/oder Thermostatkopf im Bereich des Heizkörpers angeschlossenen ist. Somit kann während Schritt b) insbesondere der mittels des Regelventils (stufenweise) wählbare bzw. einstellbare maximale Volumenstrom durch den jeweiligen Heizkörper strömen. Insbesondere bei einer (Erst-)Inbetriebnahme des Heizkreislaufs kann vor und während Schritt b) auf eine Montage der Heizkörperfühler und/oder Thermostatköpfe verzichtet werden. Insbesondere bei einer Wartung kann vor Schritt b) ein Entfernen von (aller) montierten Heizkörperfühlern und/oder Thermostatköpfen erfolgen.

Nach einer weiteren vorteilhaften Ausgestaltung wird vorgeschlagen, dass das in Schritt c) bestimmte Maß für die minimale Förderleistung in einer Heizgerätesteuerung hinterlegt wird. Beispielsweise kann so in der Heizgerätesteuerung eine minimale Drehzahl der Fördereinrichtung für einen regulären Betrieb des Heizkreislaufs hinterlegt und/oder festgelegt werden.

Nach einem weiteren Aspekt wird auch ein Computerprogramm gemäß Anspruch 9 vorgeschlagen.

Nach einem weiteren Aspekt wird auch ein maschinenlesbares Speichermedium gemäß Anspruch 10 vorgeschlagen.

Nach einem weiteren Aspekt wird auch eine Vorrichtung gemäß Anspruch 8 vorgeschlagen.

Die Erfindung wird nun anhand der Figuren detailliert erläutert.

Es stellen dar:
- Figur 1:: einen beispielhaften Ablaufplan für das hier beschriebene Verfahren, und
- Figur 2:: beispielhaft und schematisch ein Gebäude mit einer Vorrichtung, die zur Durchführung eines hier beschriebenen Verfahrens eingerichtet ist.

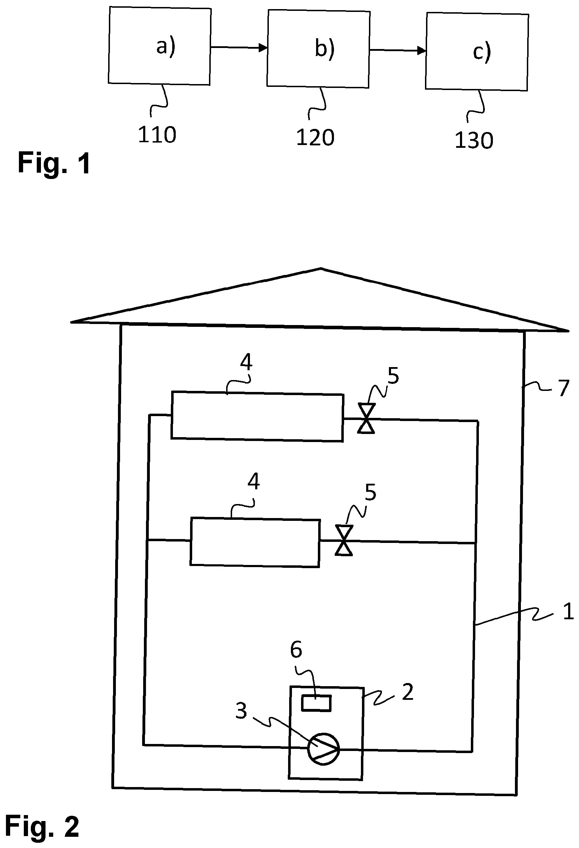

Figur 1 zeigt einen beispielhaften Ablaufplan für das hier beschriebene Verfahren zur Einstellung einer Förderleistung in einem Heizkreislauf 1 (vgl. auch Fig. 2) mit einem Heizgerät 2, einer Fördereinrichtung 3 und mindestens einem durchströmbaren Heizkörper 4. Bei dem Heizkreislauf 1 ist zur Regelung des Durchflusses durch den mindestens einen Heizkörper 4 jeweils ein ab Erreichen eines definierten Ventilvordrucks druckunabhängiges Regelventil 5 im Bereich des mindestens einen Heizkörpers 4 in dem Heizkreislauf 1 angeordnet. Die mit den Blöcken 110, 120 und 130 angedeutete Reihenfolge der Schritte a), b) und c) kann so mindestens einmal während des Ablaufs des Verfahrens durchlaufen werden.

In Block 110 erfolgt gemäß Schritt a) ein Ermitteln eines Auslegungspunktes für den Durchfluss durch den Heizkreislauf 1. In Block 120 erfolgt gemäß Schritt b) ein Anfahren des Auslegungspunktes durch Erhöhen oder Verringern der Förderleistung der Fördereinrichtung 3 bis der Auslegungspunkt erreicht wird. In Block 130 erfolgt gemäß Schritt c) ein Bestimmen eines Maßes für eine minimale Förderleistung für den Heizkreislauf 1, in Abhängigkeit eines Maßes für die Förderleistung, bei welcher der Auslegungspunkt in Schritt b) erreicht wird.

Der Auslegungspunkt kann einen bestimmten Volumenstrom durch den Heizkreislauf 1 beschreiben. Zum Anfahren des Auslegungspunktes kann eine Drehzahl der Fördereinrichtung 3 erhöht oder verringert werden. Zum Bestimmen des Maßes für die minimale Förderleistung kann eine minimale Drehzahl der Fördereinrichtung 3, bei welcher der Auslegungspunkt erreicht wird, ermittelt und mit einem Sicherheitsfaktor beaufschlagt werden. Vor Schritt a) kann ein hydraulischer Abgleich des Heizkreislaufs (1) durchgeführt werden. Zumindest während Schritt b) sollte insbesondere kein Heizkörperfühler und/oder Thermostatkopf im Bereich des Heizkörpers 4 angeschlossen sein. Das in Schritt c) bestimmte Maß für die minimale Förderleistung kann in einer Heizgerätesteuerung 6 hinterlegt werden.

Figur 2 zeigt beispielhaft und schematisch ein Gebäude 7 mit einem Heizgerät 2. In dem Gebäude 7 ist ein Heizkreislauf 1 integriert. Der Heizkreislauf 1 umfasst ein Heizgerät 2, eine Fördereinrichtung 3 und beispielhaft zwei parallel zueinander geschaltete, durchströmbare Heizkörper 4. Bei dem Heizkreislauf 1 ist zur (voneinander unabhängigen) Regelung der Volumenströme durch die zwei Heizkörper 4 jeweils ein ab Erreichen eines definierten Ventilvordrucks druckunabhängiges Regelventil 5 im Bereich der Heizkörper 4 in dem Heizkreislauf 1 angeordnet. Bei der Fördereinrichtung 3 handelt es sich hier beispielhaft um eine Umwälzpumpe. Bei dem Heizgerät 2 handelt es sich zum Beispiel um eine mit Gas befeuerbare Heizung.

Die Regelventile 5 weisen insbesondere den Vorteil auf, dass damit der Durchfluss in jedem Heizkörper 4 sehr gut und insbesondere konstant eingestellt werden kann, was auch vorteilhaft für eine möglichst minimale Geräuschentwicklung im Heizkreislauf 1 ist. Nachteilig ist bei der Verwendung dieser Ventile jedoch, dass die Ventile einen gewissen Vordruck benötigen, um den Volumenstrom konstant regeln zu können. Im Allgemeinen ist dafür ein zusätzlicher Druckverlust von mehr als 80 mbar erforderlich, der durch die Fördereinrichtung 3 aufzubringen ist. Da der (tatsächlich) vorliegende Ventilvordruck in der Regel nicht bekannt ist, muss die Pumpendrehzahl ausreichend hoch gewählt werden, weshalb sie nach dem Stand der Technik üblicherweise auf ihren maximalen Wert eingestellt wurde. Durch diese manuelle Überhöhung entsteht ein teilweise unnötiger Leistungsanstieg der Pumpe und damit auch ein Anstieg des Stromverbrauchs.

Zur Einstellung einer minimal erforderlichen, energetisch günstigen Förderleistung, insbesondere einer minimal erforderlichen Drehzahl der Fördereinrichtung 3 in dem Heizkreislauf 1 kann das vorstehend beschriebene Verfahren verwendet werden. Dies erfolgt erfindungsgemäß mit dem Ziel, den Heizkreislauf 1 mit dem minimal erforderlichen (Anlagen-) Druck zu betreiben, bei dem auch im ungünstigsten Fließweg durch den Heizkreis (in der Regel an dem Heizkörper, der am weitesten von der Fördereinrichtung entfernt ist; hier der obere Heizkörper 4) im regulären Betrieb (stets und/oder gerade noch) der erforderliche Ventilvordruck vorhanden ist, um die korrekte Funktion des Regelventils 5 ermöglichen zu können.

Hierzu kann beispielsweise wie folgt vorgegangen werden: Zunächst kann eine Berechnung des erforderlichen Gesamtvolumenstroms erfolgen. Anschließend kann ggf. eine Demontage aller TRVs (Heizkörperfühler/Thermostatköpfe) erfolgen. Danach kann die Pumpendrehzahl solange erhöht werden bis der erforderliche Gesamtvolumenstrom erreicht wurde. Danach kann die sich dabei einstellende Pumpendrehzahl um einen bestimmten prozentualen Faktor angehoben werden, um Stabilität möglichst zu gewährleisten. Diese Drehzahl kann als Mindestdrehzahl festgelegt werden. Die Mindestdrehzahl kann zum Beispiel als minimale Pumpendrehzahl eingespeichert werden. Diese Vorgehensweise kann in vorteilhafter Weise möglichst minimale Strömungsgeräusche, eine möglichst minimale Pumpendrehzahl und/oder einen möglichst minimalen elektrischen Energieverbrauch bewirken.

Somit wird ein Verfahren angegeben, mittels welchem die im Zusammenhang mit dem Stand der Technik geschilderten Probleme zumindest teilweise gelöst werden können. Insbesondere kann damit ein aus energetischer und/oder akustischer Sicht verbesserter Betrieb eines Heizkreislaufes ermöglicht werden.

### Bezugszeichenliste

- 1: Heizkreislauf
- 2: Heizgerät
- 3: Fördereinrichtung
- 4: Heizkörper
- 5: Regelventil
- 6: Heizgerätesteuerung
- 7: Gebäude

## Patentansprüche

1. Verfahren zur Einstellung einer Förderleistung in einem Heizkreislauf (1) mit einem Heizgerät (2), einer Fördereinrichtung (3) und mindestens einem durchströmbaren Heizkörper (4), wobei zur Regelung des Durchflusses durch den mindestens einen Heizkörper (4) jeweils ein ab Erreichen eines definierten Ventilvordrucks druckunabhängiges Regelventil (5) im Bereich des mindestens einen Heizkörpers (4) in dem Heizkreislauf (1) angeordnet ist, **gekennzeichnet durch** zumindest folgende Schritte:
a) Ermitteln eines Auslegungspunktes für den Durchfluss durch den Heizkreislauf (1),
b) Anfahren des Auslegungspunktes durch Erhöhen oder Verringern der Förderleistung der Fördereinrichtung (3) bis der Auslegungspunkt erreicht wird,
c) Bestimmen eines Maßes für eine minimale Förderleistung für den Heizkreislauf (1), in Abhängigkeit eines Maßes für die Förderleistung, bei welcher der Auslegungspunkt in Schritt b) erreicht wird;
wodurch die Fördereinrichtung (3) auf den minimal erforderlichen Druck eingestellt wird, sodass auch im ungünstigsten Fließweg durch den Heizkreislauf (1) im regulären Betrieb der erforderliche Ventilvordruck vorhanden ist, um die korrekte Funktion des Regelventils (5) zu ermöglichen.

2. Verfahren nach Anspruch 1, wobei der Auslegungspunkt einen bestimmten Volumenstrom durch den Heizkreislauf (1) beschreibt.

3. Verfahren nach Anspruch 1 oder 2, wobei zum Anfahren des Auslegungspunktes eine Drehzahl der Fördereinrichtung (3) erhöht oder verringert wird.

4. Verfahren nach einem der vorhergehenden Ansprüche, wobei zum Bestimmen des Maßes für die minimale Förderleistung eine minimale Drehzahl der Fördereinrichtung (3), bei welcher der Auslegungspunkt erreicht wird, ermittelt und mit einem Sicherheitsfaktor beaufschlagt wird.

5. Verfahren nach einem der vorhergehenden Ansprüche, wobei vor Schritt a) ein hydraulischer Abgleich des Heizkreislaufs (1) durchgeführt wird.

6. Verfahren nach einem der vorhergehenden Ansprüche, wobei zumindest während Schritt b) kein Heizkörperfühler und/oder Thermostatkopf im Bereich des Heizkörpers (4) angeschlossen ist.

7. Verfahren nach einem der vorhergehenden Ansprüche, wobei das in Schritt c) bestimmte Maße für die minimale Förderleistung in einer Heizgerätesteuerung (6) hinterlegt wird.

8. Vorrichtung umfassend ein Heizgerät (2) für ein Gebäude (7), einer Fördereinrichtung (3), mindestens einem Heizkörper (4), wobei zur Regelung des Durchflusses durch den mindestens einen Heizkörper (4) jeweils ein, ab Erreichen eines definierten Ventilvordrucks, druckunabhängiges Regelventil (5) im Bereich des mindestens einen Heizkörpers (4) angeordnet ist, eingerichtet zur Durchführung eines Verfahrens nach einem der Ansprüche 1 bis 7.

9. Computerprogramm, umfassend Befehle, die eine Vorrichtung nach Anspruch 8 dazu veranlassen, ein Verfahrens nach einem der Ansprüche 1 bis 7 auzuführen.

10. Maschinenlesbares Speichermedium, auf dem das Computerprogramm nach Anspruch 9 hinterlegt ist.

## Claims

1. Method for adjusting the flow rate in a heating circuit (1) with a heating appliance (2), a flow device (3) and at least one heat-transfer element (4) through which flow can pass, wherein, in order to regulate the flow through the at least one heating element (4), a pressure-independent control valve (5) is arranged in the area of the at least one heating element (4) in the heating circuit (1) as soon as a defined valve inlet pressure is reached, **characterised by** at least the following steps:
a) determining a design point for the flow through the heating circuit (1),
b) approaching the design point by increasing or decreasing the delivery rate of the delivery device (3) until the design point is reached,
c) Determining a measure for a minimum delivery rate for the heating circuit (1), depending on a measure for the delivery rate at which the design point in step b) is reached;
whereby the delivery device (3) is set to the minimum required pressure so that even in the most unfavourable flow path through the heating circuit (1) during regular operation, the required valve inlet pressure is present to enable the correct functioning of the control valve (5).

2. Method according to claim 1, wherein the design point describes a specific volume flow through the heating circuit (1).

3. Method according to claim 1 or 2, wherein the speed of the conveyor (3) is increased or decreased in order to reach the design point.

4. Method according to one of the preceding claims, wherein, in order to determine the measure for the minimum conveying capacity, a minimum rotational speed of the conveyor (3) at which the design point is reached is determined and a safety factor is applied.

5. Method according to one of the preceding claims, wherein a hydraulic balancing of the heating circuit (1) is carried out before step a).

6. Method according to one of the preceding claims, wherein at least during step b) no radiator sensor and/or thermostatic head is connected in the area of the radiator (4).

7. Method according to one of the preceding claims, wherein the minimum delivery rate determined in step c) is stored in a heating device control (6).

8. Device comprising a heating appliance (2) for a building (7), a delivery device (3), at least one radiator (4), wherein, in order to regulate the flow through the at least one radiator (4), a pressure-independent control valve (5) is arranged in the area of the at least one radiator (4) in each case when a defined valve inlet pressure is reached, designed to carry out a method according to one of claims 1 to 7.

9. Computer program comprising instructions that cause a device according to claim 8 to perform a method according to one of claims 1 to 7.

10. Machine-readable storage medium on which the computer program according to claim 9 is stored.

## Revendications

1. Procédé de réglage d'une capacité de transport dans un circuit de chauffage (1) avec un appareil de chauffage (2), un dispositif de transport (3) et au moins un corps de chauffage (4) pouvant être traversé, dans lequel, pour la régulation du débit à travers l'au moins un corps de chauffage (4), respectivement une soupape de régulation (5) indépendante de la pression dès l'atteinte d'une pression préalable de soupape définie est agencée dans la zone de l'au moins un corps de chauffage (4) dans le circuit de chauffage (1), **caractérisé par** au moins les étapes suivantes :
a) détermination d'un point de conception pour le débit par le circuit de chauffage (1),
b) démarrage du point de conception par augmentation ou diminution de la capacité de transport du dispositif de transport (3) jusqu'à ce que le point de conception soit atteint,
c) détermination d'une mesure pour une capacité de transport minimale pour le circuit de chauffage (1), en fonction d'une mesure pour la capacité de transport à laquelle le point de conception est atteint à l'étape b) ;
selon lequel le dispositif de transport (3) est réglé à la pression minimale nécessaire de sorte que la pression préalable de soupape nécessaire soit présente aussi dans la voie d'écoulement le plus défavorable à travers le circuit de chauffage (1) en fonctionnement régulier afin de permettre le fonctionnement correct de la soupape de régulation (5).

2. Procédé selon la revendication 1, dans lequel le point de conception décrit un courant volumique déterminé à travers le circuit de chauffage (1).

3. Procédé selon la revendication 1 ou 2, dans lequel une vitesse de rotation du dispositif de transport (3) est augmentée ou réduite pour le démarrage du point de conception.

4. Procédé selon l'une quelconque des revendications précédentes, dans lequel une vitesse de rotation minimale du dispositif de transport (3) à laquelle le point de conception est atteint, est déterminée pour la détermination de la mesure de la capacité de transport minimale et est alimentée avec un facteur de sécurité.

5. Procédé selon l'une quelconque des revendications précédentes, dans lequel une compensation hydraulique du circuit de chauffage (1) est réalisée avant l'étape a).

6. Procédé selon l'une quelconque des revendications précédentes, dans lequel au moins pendant l'étape b), aucun capteur de corps de chauffage et/ou aucune tête de thermostat n'est raccordée dans la zone du corps de chauffage (4).

7. Procédé selon l'une quelconque des revendications précédentes, dans lequel la mesure déterminée à l'étape c) pour la capacité de transport minimale est enregistrée dans un dispositif de commande d'appareil de chauffage (6).

8. Dispositif comprenant un appareil de chauffage (2) pour un bâtiment (7), un dispositif de transport (3), au moins un corps de chauffage (4), dans lequel pour la régulation du débit à travers l'au moins un corps de chauffage (4), respectivement une soupape de régulation (5) indépendante de la pression dès l'atteinte d'une pression préalable de soupape définie est agencée dans la zone de l'au moins un corps de chauffage (4), conçu pour la réalisation d'un procédé selon l'une quelconque des revendications 1 à 7.

9. Programme informatique comprenant des ordres qui amènent un dispositif selon la revendication 8 à mettre en œuvre un procédé selon l'une quelconque des revendications 1 à 7.

10. Support de stockage lisible par machine, sur lequel le programme informatique selon la revendication 9 est enregistré.
